# EUROPÄISCHE PATENTSCHRIFT

(11) **EP 2 777 471 B1**
(45) Veröffentlichungstag und Bekanntmachung des Hinweises auf die Patenterteilung: **22.11.2017**
(21) Anmeldenummer: 14401019.6
(22) Anmeldetag: 04.02.2014
(51) Int. Cl.: A47L 15/42, A47L 15/48

(54) **GESCHIRRSPÜLAUTOMAT, INSBESONDERE HAUSHALTSGESCHIRRSPÜLMASCHINE**
DISHWASHER, IN PARTICULAR HOUSEHOLD DISHWASHER
LAVE-VAISSELLE, NOTAMMENT LAVE-VAISSELLE MÉNAGER

(30) Priorität: 26.02.2013 DE 102013101861
(43) Veröffentlichungstag der Anmeldung: 17.09.2014
(73) Patentinhaber: Miele & Cie. KG, 33332 Gütersloh (DE)
(72) Erfinder: BERTRAM, Andre, 33739 Bielefeld (DE); DAHMS, Tobias, 30519 Hannover (DE); REILMANN, Michael, 33611 Bielefeld (DE)

(56) Entgegenhaltungen:
- EP-A1- 1 447 042
- EP-A1- 2 047 786
- WO-A1-2006/080707
- DE-A1-102011 000 042
- DE-C1- 4 330 456

## Beschreibung

Die Erfindung betrifft einen Geschirrspülautomaten, insbesondere in der Ausgestaltung als Haushaltsgeschirrspülmaschine, mit einem einen Spülraum bereitstellenden Spülbehälter, einem Kondensationstrockner zur Beaufschlagung einer Spülbehälterwand mit Außenluft und einer Wärmepumpeneinrichtung zur Aufheizung von Spülflotte.

Geschirrspülautomaten der vorgenannten Art sind aus dem Stand der Technik an sich gut bekannt. Sie verfügen über einen Spülbehälter, der seinerseits einen Spülraum bereitstellt. Im bestimmungsgemäßen Verwendungsfall dient der Spülbehälter der Aufnahme von zu reinigendem Spülgut.

Der vom Spülbehälter bereitgestellte Spülraum ist verwenderseitig über eine Beschickungsöffnung zugänglich. Diese ist mittels einer verschwenkbar ausgebildeten Spülmaschinentür fluiddicht verschließbar.

Zur Beschickung des zu reinigenden Spülgutes mit Spülflotte verfügt ein Geschirrspülautomat über eine spülraumseitig ausgebildete Sprüheinrichtung. Diese weist in der Regel zwei oder drei verdrehbar ausgebildete Sprüharme auf, mittels welcher im bestimmungsgemäßen Betrieb von einer Umwälzpumpe geförderte Spülflotte auf das zu reinigende Spülgut gesprüht wird.

Zur Aufheizung der Spülflotte kommen typischerweise elektrische Heizungen zum Einsatz. Es ist aus der DE 102011000042 A1 darüber hinaus eine Wärmepumpeneinrichtung zur Aufheizung von Spülflotte bekannt geworden, die der den Geschirrspülautomaten umgebenden Außenluft zur Aufheizung der Spülflotte Wärme entzieht.

Die DE 43 30 456 C1 beschreibt einen als Kondensationstrockner ausgebildeten Wäschetrockner mit einer Wärmepumpe, wobei die von einem Gebläse angesaugte Außenluft als Wärmequelle für die Wärmepumpe dient und die dabei abgekühlte Außenluft als Kühlluft für den Kondensator verwendet wird.

Zur Trocknung von Spülgut nach Abschluss einer bestimmungsgemäßen Reinigung verfügen aus dem Stand der Technik bekannte Geschirrspülautomaten typischerweise über einen Kondensationstrockner. In einer möglichen Ausgestaltung dient dieser der Beaufschlagung einer Spülbehälterwand mit Außenluft, was zu einer Abkühlung der Spülbehälterwand mit der Folge führt, dass im Inneren des Spülbehälters befindliche feuchte Luft an der von außen abgekühlten Spülbehälterwand innenseitig auskondensieren kann. Der im Spülbehälter befindlichen Luft wird so Feuchtigkeit entzogen, was zur Trocknung des am Ende eines bestimmungsgemäß durchlaufenden Spülprogramms noch heißen Spülguts führt.

Obgleich sich vorbeschriebene Geschirrspülautomaten im alltäglichen Praxiseinsatz bewährt haben, besteht Verbesserungsbedarf, insbesondere mit Blick auf einen vereinfachten Aufbau, der hilft, Herstell- und Montagekosten zu senken. Es ist deshalb die Aufgabe der Erfindung, einen neuartigen Geschirrspülautomaten vorzuschlagen.

Zur Lösung der vorstehend genannten Aufgabe wird mit der Erfindung ein Geschirrspülautomat mit den Merkmalen von Anspruch 1 vorgeschlagen.

Der aus dem Stand der Technik bekannte Kondensationstrockner verfügt über ein Gebläse. Dieses dient dazu, im Trocknungsfall von außen Raumluft anzusaugen und dieses außenseitig am Spülbehälter an einer Spülbehälterwand vorbei zu führen. In der schon vorbeschriebenen Weise kommt es dabei zu einer Abkühlung der Spülbehälterwand, und zwar mit der Folge, dass im Inneren des Spülbehälters befindliche warmfeuchte Luft innenseitig der abgekühlten Spülbehälterwand auskondensieren kann.

Der Geschirrspülautomat weist darüber hinaus eine Wärmepumpeneinrichtung auf, welches gleichfalls über ein Gebläse verfügt. Dieses dient dazu, von außen Raumluft anzusaugen und diese zwecks Wärmeübertragung durch einen Verdampfer hindurchzuführen. Mit der Wärmepumpeneinrichtung wird eine Aufheizung von Spülflotte erreicht, wobei sie der den Geschirrspülautomaten umgebenden Außenluft zur Aufheizung der Spülflotte Wärme entzieht.

Mit der Erfindung wird nun vorgeschlagen, dass der Kondensationstrockner und die Wärmepumpeneinrichtung ein gemeinsames Gebläse aufweisen, dass der Geschirrspülautomat also anstelle eines ersten Gebläses für den Kondensationstrockner und eines zweiten Gebläses für die Wärmepumpeneinrichtung nur über ein einziges Gebläse verfügt, das dafür geeignet und bestimmt ist, sowohl als Trocknungsgebläse für den Kondensationstrockner als auch als Wärmepumpengebläse für die Wärmepumpeneinrichtung verwendet zu werden. Anstelle von zwei Gebläsen verfügt der erfindungsgemäße Geschirrspülautomat nur über ein einziges Gebläse.

Die erfindungsgemäße Ausgestaltung ist insofern von Vorteil, als dass auf ein zweites Gebläse vollends verzichtet wird. Dies erbringt eine Kostenersparnis sowohl bei der Herstellung aufgrund der erreichten Bauteilreduzierung als auch bei der Montage. Darüber hinaus ist von Vorteil, dass durch Wegfall eines Gebläses zusätzlicher Bauraum innerhalb des Geschirrspülautomaten zur Verfügung steht, beispielsweise für die Wärmepumpeneinrichtung, was eine optimierte Ausgestaltung derselben ermöglicht.

Das erfindungsgemäß vorgesehene Gebläse ist gemäß einem Ausführungsbeispiel einem Verdampfer der Wärmepumpeneinrichtung strömungstechnisch nachgeschaltet. Vom Gebläse angesogene Außenluft passiert demnach automatenseitig zunächst den dem Gebläse strömungstechnisch vorgeschalteten Verdampfer. Bei eingeschalteter Wärmepumpeneinrichtung kommt es im Verdampfer zu einer Abkühlung der Außenluft. Bei ausgeschalteter Wärmepumpeneinrichtung durchströmt die angesogene Außenluft den Verdampfer ohne Temperaturänderung.

In Strömungsrichtung der angesogenen Luft ist dem Gebläse eine Luftumschaltvorrichtung nachgeschaltet. Mittels dieser Luftumschaltvorrichtung kann die angesogene Luft einem ersten und/oder einem zweiten Strömungsweg zugeführt werden. Gemäß dem ersten Strömungsweg erfolgt ein Ableiten der Luft aus dem Geschirrspülautomaten hinaus; hierfür weist der Geschirrspülautomat Luftabgabeöffnungen auf, bevorzugterweise seitlich und/oder an der Rückwand des Geschirrspülautomaten ausgebildete Luftabgabeöffnungen. Dieser Strömungsweg steht typischerweise bei in Betrieb befindlicher Wärmepumpeneinrichtung zur Verfügung, das heißt während einer Aufheizung von Spülflotte mittels der Wärmepumpeneinrichtung. Die in Folge der Aufheizung der Spülflotte im Verdampfer abgekühlte Außenluft wird über den ersten Strömungsweg abgeführt und aus dem Geschirrspülautomaten geleitet. Der zweite Strömungsweg findet indes bei einer Kondensationstrocknung nach Abschluss eines bestimmungsgemäß durchlaufenden Reinigungsprogramms Verwendung. Die über das Gebläse angesogene Außenluft wird in diesem Fall nicht über die Luftauslässe aus dem Geschirrspülautomaten hinaus abgeleitet. Es findet vielmehr eine automateninterne Umlenkung der Außenluft statt, infolgedessen diese außenseitig einer Spülbehälterwand des Spülbehälters zwecks Abkühlung derselben vorbeiströmt.

Es kann alternativ zum Vorbeschriebenen auch vorgesehen sein, dass beide Strömungswege gleichzeitig zumindest teilweise geöffnet sind, mithin die vom Gebläse geförderte Luft sowohl über den ersten Strömungsweg über die, insbesondere seitlich und/oder an der Rückwand des Geschirrspülautomaten ausgebildeten, Luftabgabeöffnungen abgeleitet als auch über den zweiten Strömungsweg an einer Spülbehälterwand außenseitig vorbei geleitet wird. Dabei ist das Verhältnis der auf die beiden Strömungswege aufgeteilten Luftmengen vorzugsweise einstellbar und kann beispielsweise in Abhängigkeit des gewünschten Kühleffektes der Spülbehälterwand frei gewählt werden.

Die Luftumschaltvorrichtung weist vorzugsweise eine Luftklappe auf, mit der ein Strömungsweg, insbesondere der zweite Strömungsweg, wahlweise geöffnet oder geschlossen werden kann, die Luftklappe kann insbesondere verschwenkbar ausgebildet sein. Es können auch zwei Luftklappen, nämlich für den ersten und den zweiten Strömungsweg jeweils eine derartige Luftklappe vorhanden sein. Alternativ kann lediglich eine Luftklappe vorhanden sein, die beiden Strömungswegen zugeordnet ist, und die bei geschlossenem ersten Strömungweg den zweiten Strömungsweg freigibt und umgekehrt.

Die erfindungsgemäße Verwendung nur eines Gebläses erfüllt verfahrensseitig zudem den Vorteil, dass bei ansonsten ausgeschalteter Wärmepumpeneinrichtung ein Nachlauf des Gebläses zwecks Trocknung des durch Kondensat unter Umständen feuchten Verdampfers der Wärmepumpeneinrichtung gestattet ist. Dabei findet ein solches Trocknen des Verdampfers bevorzugterweise dann statt, wenn das Gebläse zwecks Kondensationstrocknung ohnehin in Betrieb ist. Der Einsatz nur eines Gebläses bietet insofern einen synergetischen Effekt, als dass einerseits durch die Luftförderung eine Trocknung des Verdampfers als auch andererseits durch Abkühlung einer Spülbehälterwand eine Kondensationstrocknung des Spülgutes erreicht wird. Dieser synergetische Effekt ergibt sich bei aus dem Stand der Technik vorbekannten Geschirrspülautomaten nicht.

Unabhängig zum vorbeschriebenen Geschirrspülautomaten wird mit der Erfindung deshalb verfahrensseitig ferner vorgeschlagen ein Verfahren zum Betrieb eines mit einer Wärmepumpeneinrichtung ausgerüsteten Geschirrspülautomaten, bei dem in einer Aufheizphase Spülflotte in einem Verflüssiger erwärmt und die dazu in einem Verdampfer abgekühlte Außenluft mittels eines Gebläses abgeleitet wird und bei dem in einer Trocknungsphase das Gebläse bei ansonsten ausgeschalteter Wärmepumpeneinrichtung weiter betrieben wird.

Nach der erfindungsgemäßen Verfahrensdurchführung erfolgt in an sich bekannter Weise ein bestimmungsgemäßer Betrieb der Wärmepumpeneinrichtung, demgemäß es zu einer Abkühlung von außen angesogener Raumluft kommt. Diese abgekühlte Raumluft wird mittels des Gebläses abgeleitet. Sobald die Spülflotte mittels der Wärmepumpeneinrichtung in bestimmungsgemäßer Weise erwärmt ist, erfolgt eine Abschaltung der Wärmepumpeneinrichtung. Erfindungsgemäß ist nun vorgesehen, dass das Gebläse der Wärmepumpeneinrichtung bei ansonsten ausgeschalteter Wärmepumpeneinrichtung weiter betrieben wird. In vorteilhafter Weise wird so erreicht, dass durch den Verdampfer nach wie vor von außen angesogene Außenluft geführt wird. Dies führt in vorteilhafter Weise dazu, dass sich im Verdampfer unter Umständen angesammeltes Kondensat von der hindurchgeführten Außenluft mitgenommen, das heißt eine Abtrocknung des Verdampfers erreicht wird. Es wird so sichergestellt, dass es nicht aufgrund von Restfeuchte zu einer Verkeimung des Verdampfers mit einhergehender Geruchsbelästigung kommt. Die erfindungsgemäße Verfahrensdurchführung stellt vielmehr eine Abtrocknung des Verdampfers nach einem bestimmungsgemäßen Einsatz sicher.

Gemäß einem weiteren Merkmal der Erfindung folgt der ersten Trocknungsphase eine weitere Trocknungsphase nach, wobei in der weiteren Trocknungsphase eine Spülbehälterwand mit der vom Gebläse geförderten Außenluft beaufschlagt wird. Gemäß dieser weiteren Trocknungsphase erfolgt also in an sich bekannter Weise eine Kondensationstrocknung des vom Spülbehälter aufgenommenen Spülguts.

Dem Gebläse ist in Strömungsrichtung der Außenluft eine Luftumschaltvorrichtung nachgeschaltet, mittels der die vom Gebläse geförderte Außenluft gemäß einem weiteren Merkmal der Erfindung wahlweise auf unterschiedliche Strömungswege verteilt wird. Die Verteilung der vom Gebläse geförderten Außenluft auf einen ersten und/oder einen zweiten Strömungsweg erbringt die schon vorerläuterten Vorteile.

Vorzugsweise kann das Gebläse mit einer ersten Drehzahl und mit einer gegenüber der ersten Drehzahl niedrigeren, insbesonders wesentlich niedrigeren Drehzahl betrieben werden, insbesondere ist das Gebläse drehzahlregelbar. Das Gebläse wird bei Betrieb der Wärmepumpeneinrichtung, also in einer Spülflottenaufheizphase, mit der ersten Drehzahl betrieben, wobei ein Volumenstrom von mindestens 50m³/h gefördert wird. Bei abgeschalteter Wärmepumpeneinrichtung, also während der ersten und/oder der weiteren Trocknungsphase, wird das Gebläse dagegen mit reduzierter Drehzahl betrieben, wodurch ein energetisch besonders effizienter Betrieb des Geschirrspülautomaten gewährleistet ist.

Weitere Merkmale und Vorteile der Erfindung ergeben sich aus der nachfolgenden Beschreibung anhand der Figuren. Dabei zeigen:
- Fig. 1: in schematisch perspektivischer Ansicht einen Geschirrspülautomaten mit einer Kondensationstrocknung;
- Fig.2: in einer schematischen Frontansicht den Geschirrspülautomaten nach Fig. 1;
- Fig. 3: in schematisch perspektivischer Ansicht einen Geschirrspülautomaten mit einer Wärmepumpeneinrichtung;
- Fig. 4: in einer schematischen Draufsicht von oben die Wärmepumpeneinrichtung des Geschirrspülautomaten nach Fig. 3;
- Fig. 5: in einer schematischen Seitenansicht einen Geschirrspülautomaten nach der Erfindung mit einer in einer Aufheizphase befindlichen Wärmepumpeneinrichtung;
- Fig. 6: in einer schematischen Seitenansicht einen Geschirrspülautomaten nach der Erfindung mit einer in einer Trocknungsphase befindlichen Wärmepumpeneinrichtung;
- Fig. 7: in schematischer Frontansicht den Geschirrspülautomaten nach Fig. 6.
- Fig. 8: in einer schematischen Seitenansicht eine weitere Ausgestaltungsform mit dem Verdampfer strömungstechnisch vorgeschaltetem Gebläse
- Fig. 9: eine weitere Ausgestaltung der Luftwegumschaltung nach der Erfindung mit einer in einer Aufheizphase befindlichen Wärmepumpeneinrichtung;
- Fig. 10: eine weitere Ausgestaltung der Luftwegumschaltung nach der Erfindung mit einer in einer Trocknungsphase befindlichen Wärmepumpeneinrichtung

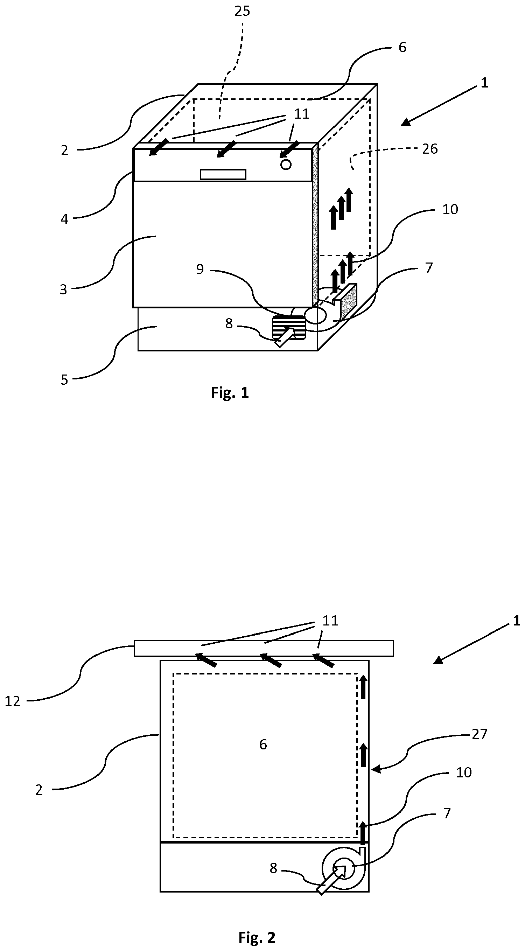

Fig. 1 lässt in schematisch perspektivischer Ansicht einen Geschirrspülautomaten 1 in der Ausgestaltung als Haushaltsgeschirrspülmaschine erkennen.

Der Geschirrspülautomat 1 verfügt über ein Außengehäuse 2. Diese nimmt einen Spülbehälter 25 auf, der einen Spülraum 6 bereitstellt. Der Spülbehälter 25 ist frontseitig mittels einer Beschickungsöffnung zugänglich, die mittels einer verschwenkbar angeordneten Tür 3 fluiddicht verschließbar ist.

Die Tür 3 verfügt mit Bezug auf die Zeichnungsebene nach Fig. 1 oberseitig über eine Blende 4. Unterseitig der Tür 3 ist ein Sockelbereich 5 vorgesehen, der einen Lufteinlass 9 für Außen-, das heißt Raumluft 8 bereitstellt.

Oberseitig des Außengehäuses 2 ist im endmontierten Zustand eine Abdeckplatte 12, beispielsweise in der Ausgestaltung einer Arbeitsplatte angeordnet, wie insbesondere die Darstellung nach Fig. 2 erkennen lässt.

Der Geschirrspülautomat 1 verfügt über einen Kondensationstrockner 27. Dieser weist ein Gebläse 7 auf, das über den Lufteinlass 9 Außenluft 8 ansaugt. Die angesogene Außenluft 8 wird als Luftstrom 10 an der Spülbehälterwand 26 des Spülbehälters 25 vorbeigeführt und wird oberseitig des Spülbehälters 25 als Abluft 11 an die den Geschirrspülautomaten 1 umgebende Atmosphäre wieder abgegeben. Dort kann die durch das Vorbeiströmen an dem warmen Spülbehälter erwärmte Abluft 11 insbesondere dazu dienen, eine angrenzende Küchenarbeitplatte vorzuwärmen und ein Luftpolster bereitzustellen, der verhindert, dass bei einer Öffnung der Spülbehältertür 3 austretende Wrasen an der Küchenarbeitsplatte kondensieren.

Im bestimmungsgemäßen Einsatzfall erfolgt zum Abschluss eines Reinigungsprogramms ein Klarspülen. Die Spülflotte und damit auch das vom Spülbehälter 25 aufgenommene Spülgut werden dabei auf beispielsweise 55°C aufgewärmt. Durch Zugabe eines Klarspülmittels wird die Oberflächenspannung der Spülflotte herabgesetzt. Zum Ende des Klarspülens wird die Spülflotte abgepumpt. In einer Abtropfphase kann Restfeuchtigkeit vom Spülgut und den im Spülbehälter befindlichen Körben zur Aufnahme von Spülgut abtropfen beziehungsweise ablaufen, was durch die niedrige Oberflächenspannung begünstigt wird. Die Eigenwärme des Spülguts lässt den noch zurückbleibenden Wasserfilm verdunsten. Die Spülraumluft sättigt sich folglich allmählich mit Wasserdampf. Ist die Spülraumluft gesättigt, kann kein weiteres Wasser vom Spülgut und den Körben abtrocknen. Um die Feuchtigkeit in der Spülraumluft zu senken und somit wieder aufnahmefähig zu machen, wird eine Spülbehälterwand 26 des Spülbehälters 25 mit einem Luftstrom 10 in der schon vorbeschriebenen Weise gekühlt. Die Temperatur der Spülraumwand 26 sinkt und somit wird der Taupunkt der feuchten Spülraumluft unterschritten. Der Wasserdampf in der gesättigten Spülraumluft kann an der Spülraumwand 26 kondensieren. Die Spülraumluft ist nicht mehr gesättigt und kann somit wieder Feuchtigkeit aufnehmen.

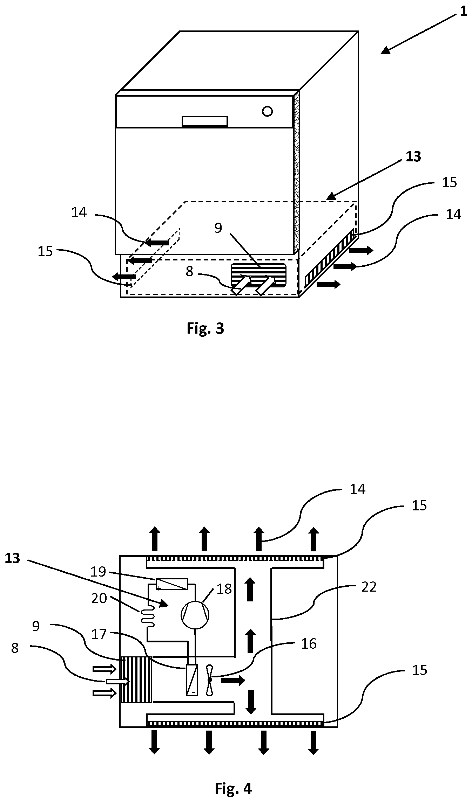

Die Figuren 3 und 4 lassen einen mit einer Wärmepumpeneinrichtung 13 ausgerüsteten Geschirrspülautomaten 1 erkennen.

Die Wärmepumpeneinrichtung 13 verfügt im Wesentlichen über vier Bauteile, die strömungstechnisch über ein Rohrleitungssystem miteinander verbunden sind, in welchem ein Arbeitsmedium (Kältemittel) strömt. In Strömungsrichtung des Kältemittels sind die einzelnen Bauteile so angeordnet, dass zuerst ein Verdampfer 17, anschließend ein Verdichter 18 und schließlich ein Verflüssiger 19 durchströmt werden. Anschließend durchläuft das Kältemittel eine Expansionseinrichtung 20 (Drosselstelle) bevor es wieder dem Verdampfer 17 zugeführt wird.

Für den Betrieb des Wärmepumpenkreislaufes wird zuerst flüssiges Kältemittel in den Verdampfer 17 eingespritzt. Aufgrund des niedrigen Drucks des Kältemittels im Verdampfer 17 kann das Kältemittel bei Niedrigtemperaturen verdampfen. Anschließend saugt der Verdichter 18 das gasförmige Kältemittel mit niedrigem Druck an und verdichtet es auf einen hohen Druck. Dabei wird das Kältemittel heiß. Das Kältemittel beinhaltet dadurch ungefähr die Summe der Verdampfungsenergie und Antriebsenergie des Verdichters 18. Diese Energie wird innerhalb des Verflüssigers 19 wieder abgegeben. Dies geschieht durch das Kondensieren des Kältemittels. Schließlich wird das flüssige Kältemittel mittels der Drosselstelle 20 auf einen niedrigen Druck expandiert, so dass es wieder verdampfen kann, um den Wärmepumpenkreislauf ein weiteres Mal zu durchlaufen.

Damit dieser Wärmepumpenkreislauf funktioniert, muss dem Verdampfer Wärmeenergie zur Verfügung gestellt und dem Verflüssiger Wärme entzogen werden. Der Verdampfer erhält dabei wie zuvor beschrieben die notwendige Wärmeenergie zur Verdampfung des Kältemittels durch das Abkühlen von Zuluft (d.h. Raumluft), während der Verflüssiger die Wärmeenergie an Spülflotte der Geschirrspülmaschine abgibt.

Zur Beschickung des Verdampfers 17 mit Außenluft 8 kommt ein Gebläse 16 zum Einsatz, das in Strömungsrichtung der Außenluft 8 dem Verdampfer 17 nachgeschaltet ist, wie insbesondere die Darstellung nach Fig. 4 erkennen lässt. Die nach einem Passieren des Verdampfers 7 abgekühlte Außenluft 8 gelangt alsdann über einen Luftkanal 22 zu seitlichen Luftauslässen 15 des Geschirrspülautomaten 1, durch welche die abgekühlte Außenluft 8 den Geschirrspülautomaten 1 als Abluft 14 verlässt.

Infolge der Abkühlung der Außenluft 8 bei einem bestimmungsgemäßen Betrieb der Wärmepumpeneinrichtung 13 kann es zu einem Auskondensieren von Luftfeuchtigkeit kommen, die sich im Verdampfer 17, im Luftkanal 22 und im Gebläse 16 niederschlagen und ansammeln kann. Dieses anfallende Kondensat wird in einer dafür vorgesehenen Auffangwanne gesammelt und entweder verworfen oder in einem Spülprozess verwendet.

Problematisch bei einem auch bestimmungsgemäßen Betrieb der Wärmepumpeneinrichtung 13 ist, dass die Oberflächen des Verdampfers 17 (Rohre und Lamellen) nach einem Abschalten der Wärmepumpeneinrichtung 13 mit Feuchtigkeit benetzt sind. Auch Teile des Luftkanals 22 oder des Lüfters 16 können zum Programmende Feuchtigkeit aufweisen. Ein alleiniges Abtrocknen der Oberflächen in einem nahezu geschlossenen Außengehäuse ist nicht vollständig möglich.

Insbesondere bei langen Stillstandzeiten können aufgrund der mit Feuchtigkeit benetzten Oberflächen Bakterien, Keime und/oder dergleichen Anhaftungen entstehen. Diese können zu einer ungewollten Geruchsbildung führen, was verwenderseitig als unangenehm und mithin als nachteilig empfunden wird.

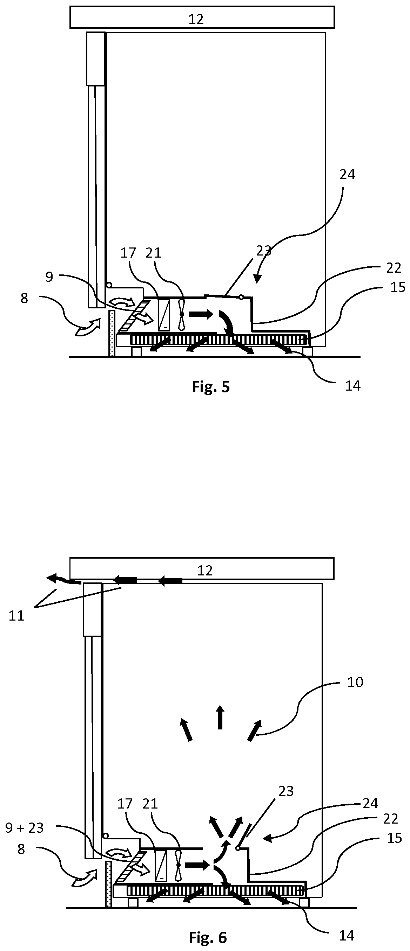

Die Figuren 5, 6 und 7 zeigen einen in erfindungsgemäßer Weise ausgebildeten Geschirrspülautomaten 1, dessen Besonderheit darin besteht, dass anstelle eines ersten Gebläses 7 für den Kondensationstrockner 27 und eines zweiten Gebläses 16 für die Wärmepumpeneinrichtung 13 nur ein einziges Gebläse 21 vorgesehen ist, das als gemeinsames Gebläse sowohl für den Kondensationstrockner 27 als auch die Wärmepumpeneinrichtung 13 vorgesehen ist. Dabei kann bevorzugterweise das von der Wärmepumpeneinrichtung 13 bereitgestellte Gebläse 16 als gemeinsames Gebläse 21 genutzt werden.

Dem gemeinsamen Gebläse 21 ist in Strömungsrichtung eine Luftumschaltvorrichtung 24 nachgeschaltet, die im gezeigten Ausführungsbeispiel über eine verdrehbar angeordnete Luftklappe 23 verfügt. Anstelle einer solchen Luftklappe 23 kann auch ein Schieber und/oder vergleichbares vorgesehen sein. Von entscheidender Bedeutung ist, dass mittels der Luftumschaltvorrichtung 24 die vom Gebläse 21 angesogene Außenluft 8 als Luftstrom 10 an der Spülbehälterwand 26 vorbeigeführt und/oder als Abluft 14 dem Luftauslass 15 zugeführt werden kann, wie sich dies insbesondere aus einer Zusammenschau der Figuren 5 und 6 ergibt. Diese Ausgestaltung erbringt insbesondere den Vorteil, dass auf ein herkömmliches Trocknungsgebläse verzichtet werden kann. Dies hat neben einer Kosteneinsparung den zusätzlichen Vorteil, dass mehr Bauraum für die Wärmepumpeneinrichtung 13 zur Verfügung steht.

Bei einem Betrieb der Wärmepumpeneinrichtung 13 wird während einer Aufheizphase Spülflotte durch den Verflüssiger 19 erwärmt und die abgekühlte Raumluft 14 über einen Luftauslass 15 aus dem Automaten 1 abgeleitet. Nach einem Abschalten des Verdichters 18 sind der Luftkanal 22, das Gebläse 21 und der Verdampfer 17 noch teilweise mit Feuchtigkeit benetzt. Um diese nassen Komponenten abzutrocknen, ist erfindungsgemäß vorgesehen, das Gebläse 21 bei ansonsten ausgeschalteter Wärmepumpeneinrichtung 13 eingeschaltet zu lassen oder während eines späteren Programmabschnitts wieder einzuschalten. Die Raumluft 8, die dann im Verdampfer 17 nicht mehr abgekühlt wird, kann Restfeuchte aufnehmen und somit den Luftkanal 22, den Verdampfer 17 und das Gebläse 21 abtrocknen. Dabei bleibt der Luftweg der vom Gebläse 21 geförderten Raumluft der gleiche wie auch während einer Aufheizphase, das heißt bei eingeschalteter Wärmepumpeneinrichtung 13.

Mittels der schon vorbeschriebenen Luftumschaltvorrichtung 24 kann eine Umschaltung des Luftweges stattfinden. Hierdurch ist es ermöglicht, trotz im Unterschied zum Stand der Technik nicht mehr vorhandenem Trocknungsgebläse 7 eine Kondensationstrocknung durchzuführen, indem nämlich die vom Gebläse 21 geförderte Luft als Luftstrom 10 an der Spülbehälterwand 26 vorbeigeführt wird.

Wie die Darstellung nach den Figuren 5 und 6 erkennen lässt, ist es bevorzugt, den Luftkanal 22 mit einer verschwenkbaren Luftklappe 23 auszurüsten. Diese Luftklappe 23 kann in der Nähe der Spülbehälterwand 26 ausgebildet sein. Die Luftklappe 23 weist einen nicht dargestellten Antrieb auf, hierfür kann beispielsweise ein Wachsdehnelement, ein Stellmotor, ein Formgedächtnismetall und/oder dergleichen zum Einsatz kommen. Dabei kann entweder vorgesehen sein, dass nur der eine oder nur der andere Luftweg oder dass beide Luftwege gleichermaßen mit Außenluft 8 beaufschlagt werden.

Typischerweise werden während einer Aufheizphase der Wärmepumpeneinrichtung ein Volumenstrom von 50-150 m³/h, bevorzugt 70 m³/h mittels des Gebläses gefördert, während für die Kondensationstrocknung typischerweise ein kleinerer Volumenstrom (10-50 m³/h, bevorzugt 30 m³/h) ausreicht. Die jeweiligen Volumenströme können über eine Einstellung eines entsprechenden Verhältnisses der beiden Luftwege oder über eine Drehzahlregelung des Gebläses 21 erreicht werden.

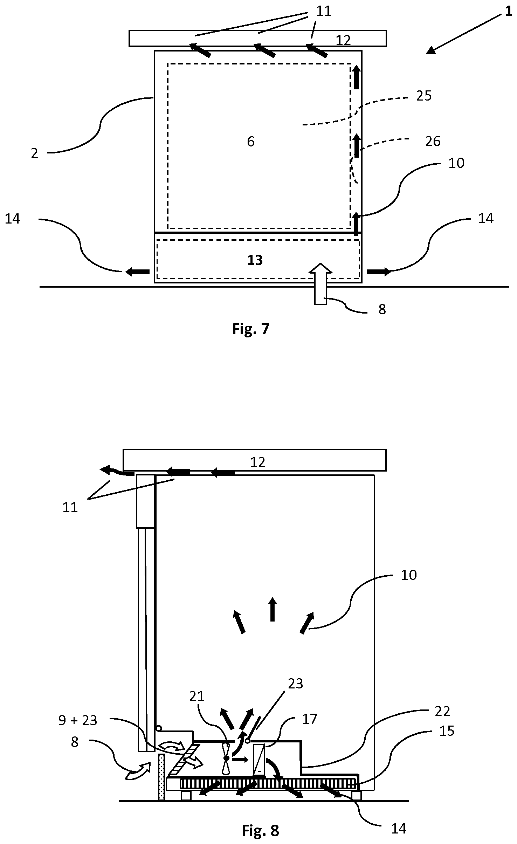

In einer weiteren Ausgestaltung kann das vorgesehene Gebläse 21 auch dem Verdampfer 17 strömungstechnisch vorgeschaltet sein, wie die Figur 8 offenbart. Bei geschlossener Klappe 23 befindet sich die Wärmepumpeneinrichtung 13 in der Aufheizphase, wobei der gesamte Luftstrom durch den Verdampfer 17 geleitet wird. Bei offener Klappe 23 (wie in Fig 8 dargestellt) wird in der Trocknungphase ein Teilvolumenstrom über die Spülraumwand zur Kondensationstrocknung geleitet. Der zweite Teilvolumenstrom dient der Trocknung des Verdampfers.

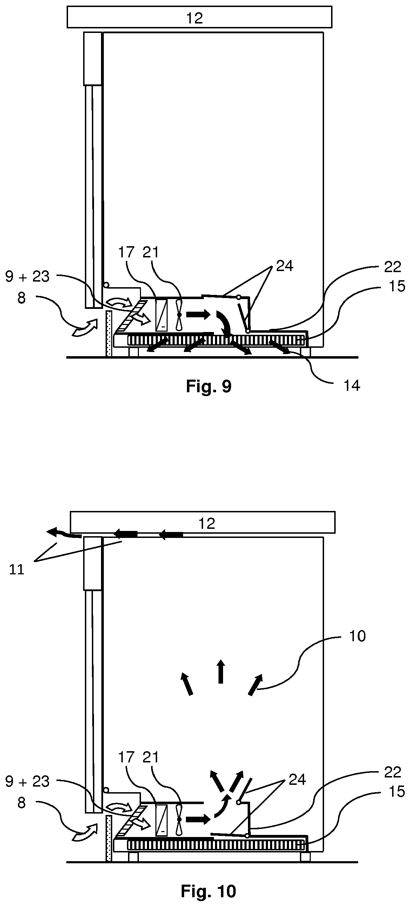

Die Luftumschaltung kann wie in Figur 9 und 10 dargestellt auch mit mehreren Luftklappen 23 umgesetzt werden. Es ist weiterhin vorstellbar mehrere Luftklappen 23 über nur einen Aktor zu betätigen. Dies kann beispielsweise über dem Fachmann bekannte Hebelmechaniken umgesetzt werden.

Ein möglicher Verfahrensablauf stellt sich wie folgt dar:
Es findet zunächst ein Aufheizen der Spülflotte mittels der Wärmepumpeneinrichtung 13 statt. Der Verdichter 18 der Wärmepumpeneinrichtung 13 wird nach erfolgter Aufheizung ausgeschaltet. Es werden die weiteren Spülphasen wie zum Beispiel das Zwischenspülen oder das Klarspülen mit oder ohne Aufheizphasen durchgeführt. Bei ausgeschaltetem Verdichter 18 der Wärmepumpeneinrichtung 13 erfolgt dann eine Einschaltung des Gebläses 21, wodurch eine Trocknung des Gebläses 21, des Luftkanals 22 und des Verdampfers 17 stattfindet. In einem weiteren Trocknungsschritt startet dann die Trocknung des gereinigten Spülgutes durch Kondensationstrocknung, zu welchem Zweck der zweite Luftweg geöffnet und die vom Gebläse 21 geförderte Außenluft 8 als Luftstrom 10 an der Spülbehälterwand 26 vorbeigeführt wird. Bei gleichzeitigem Öffnen beider Strömungswege kann gemäß einer alternativen Durchführung gleichzeitig eine Spülguttrocknung durch Kondensationstrocknung und eine Trocknung von Verdampfer 17, Gebläse 21 und Luftkanal 22 stattfinden.

Insgesamt ergeben sich mit der erfindungsgemäßen Ausgestaltung damit Bauraum- und Kostenvorteile, da ein kombiniertes Gebläse 21 sowohl für die Wärmepumpeneinrichtung 13 als auch für den Kondensationstrockner 27 zum Einsatz kommt. Darüber hinaus kann eine Zeit- und Energieersparnis bei der Verfahrensdurchführung erreicht werden, da ein gleichzeitiges Trocknen sowohl von Spülgut als auch von Verdampfer 17, Gebläse 21 und Luftkanal 22 stattfinden kann.

### Bezugszeichen

- 1: Geschirrspülautomat
- 2: Außengehäuse
- 3: Tür
- 4: Blende
- 5: Sockelbereich
- 6: Spülraum
- 7: Gebläse
- 8: Außenluft (Raumluft)
- 9: Lufteinlass
- 10: Luftstrom
- 11: Abluft
- 12: Abdeckplatte
- 13: Wärmepumpeneinrichtung
- 14: Abluft
- 15: Luftauslass
- 16: Gebläse
- 17: Verdampfer
- 18: Verdichter
- 19: Verflüssiger
- 20: Expansionseinrichtung
- 21: Gebläse
- 22: Luftkanal
- 23: Luftklappe
- 24: Luftumschaltvorrichtung
- 25: Spülbehälter
- 26: Spülbehälterwand
- 27: Kondensationstrockner

## Patentansprüche

1. Geschirrspülautomat, insbesondere Haushaltsgeschirrspülmaschine, mit einem einen Spülraum (6) bereitstellenden Spülbehälter (25), einem Kondensationstrockner (27) zur Beaufschlagung einer Spülbehälterwand (26) mit Außenluft und einer Wärmepumpeneinrichtung (13) zur Aufheizung von Spülflotte, **dadurch gekennzeichnet,**
**dass** der Kondensationstrockner (27) und die Wärmepumpeneinrichtung (13) ein gemeinsames Gebläse (21) aufweisen, mit dem Außenluft angesaugt und durch einen Verdampfer (17) der Wärmepumpeneinrichtung (13) hindurchgeführt werden kann,
wobei dem Gebläse (21) eine Luftumschaltvorrichtung (24) strömungstechnisch nachgeschaltet ist, mittels der die vom Gebläse (21) geförderte Außenluft wahlweise auf unterschiedliche Strömungswege (10, 14) verteilbar ist, so dass sie über einen ersten Strömungsweg (14) über den Luftauslass (15) aus dem Geschirrspülautomaten hinaus oder über einen zweiten Strömungsweg (10) außenseitig an der Spülbehälterwand (26) vorbeigeführt werden kann.

2. Geschirrspülautomat nach dem vorhergehenden Anspruch, **dadurch gekennzeichnet, dass** die Luftumschaltvorrichtung (24) eine verschwenkbar ausgebildete Luftklappe (23) aufweist.

3. Geschirrspülautomat nach einem der beiden vorhergehenden Ansprüche, **dadurch gekennzeichnet, dass** die Luftumschaltvorrichtung (24) ausgangsseitig an zwei Strömungswege (10, 14) angeschlossen ist.

4. Geschirrspülautomat nach einem der vorhergehenden Ansprüche, **dadurch gekennzeichnet, dass** das Gebläse (21) einem Verdampfer (17) der Wärmepumpeneinrichtung (13) strömungstechnisch nachgeschaltet ist.

5. Verfahren zum Betrieb eines mit einer Wärmepumpeneinrichtung (13) ausgerüsteten Geschirrspülautomaten, bei dem in einer Aufheizphase Spülflotte in einem Verflüssiger (19) erwärmt und die dazu in einem Verdampfer (17) abgekühlte Außenluft mittels eines Gebläses (21) über einen ersten Strömungsweg (14) über den Luftauslass (15) aus dem Geschirrspülautomaten abgeleitet wird und bei dem in einer Trocknungsphase das Gebläse (21) bei ansonsten ausgeschalteter Wärmepumpeneinrichtung (13) weiter betrieben wird und in einer zweiten Trocknungsphase eine Spülbehälterwand (26) mit der vom Gebläse (21) geförderten Außenluft beaufschlagt wird, wobei die Außenluft über einen zweiten Strömungsweg (10) außenseitig an der Spülbehälterwand (26) vorbeigeführt wird.

6. Verfahren nach Anspruch 5 , **dadurch gekennzeichnet, dass** dem Gebläse (21) eine Luftumschaltvorrichtung (24) strömungstechnisch nachgeschaltet ist, mittels der die vom Gebläse (21) geförderte Außenluft wahlweise auf unterschiedliche Strömungswege (10, 14) verteilt wird.

7. Verfahren nach einem der Ansprüche 5 bis 6, **dadurch gekennzeichnet, dass** das Gebläse (21) während der ersten und/oder der zweiten Trocknungsphase mit gegenüber der Drehzahl in der Aufheizphase reduzierter Drehzahl betrieben wird.

## Claims

1. Automatic dishwasher, in particular a domestic dishwasher, comprising a washing container (25) that provides a washing chamber (6), comprising a condensation dryer (27) for supplying a washing container wall (26) with external air, and comprising a heat pump device (13) for heating washing solution,
**characterised in that**
the condensation dryer (27) and the heat pump device (13) comprise a common fan (21) by means of which external air can be drawn in and guided through an evaporator (17) of the heat pump device (13),
an air switching apparatus (24) being downstream of the fan (21) in terms of flow, by means of which apparatus the external air conveyed by the fan (21) can be selectively distributed to different flow paths (10, 14) such that said air can be guided out of the automatic dishwasher through the air outlet (15) via a first flow path (14) or can be guided past the washing container wall (26) on the outside via a second flow path (10).

2. Automatic dishwasher according to the preceding claim, **characterised in that** the air switching apparatus (24) comprises an air flap (23) that is designed to pivot.

3. Automatic dishwasher according to either of the two preceding claims, **characterised in that** the air switching apparatus (24) is connected to two flow paths (10, 14) at the outlet side.

4. Automatic dishwasher according to any of the preceding claims, **characterised in that** the fan (21) is downstream of an evaporator (17) of the heat pump device (13) in terms of flow.

5. Method for operating an automatic dishwasher according to any of the preceding claims, wherein, in a heating phase, washing solution is heated in a condenser (19) of the heat pump device (13) and the external air cooled in an evaporator (17) of the heat pump device (13) for this purpose is conveyed, by means of the fan (21), out of the automatic dishwasher through the air outlet (15) via a first flow path (14) and wherein, in a drying phase, the fan (21) continues to operate when the heat pump device (13) is otherwise switched off and, in a second drying phase, a washing container wall (26) is supplied with the external air conveyed by the fan (21), the external air being guided past the washing container wall (26) on the outside via a second flow path (10).

6. Method according to claim 5, **characterised in that** an air switching apparatus (24) being downstream of the fan (21) in terms of flow, by means of which apparatus the external air conveyed by the fan (21) is distributed to different flow paths (10, 14).

7. Method according to either of claims 5 or 6, **characterised in that** the fan (21) is operated at a slower rotational speed during the first and/or second drying phase in comparison with the rotational speed during the heating phase.

## Revendications

1. Lave-vaisselle automatique, en particulier lave-vaisselle domestique, avec une cuve de lessivage (25) fournissant un espace de lavage (6), avec un sécheur à condensation (27) destiné à alimenter une paroi de cuve de lessivage (26) en air extérieur et avec un dispositif de pompe à chaleur (13) destiné à chauffer un bain de lavage,
**caractérisé en ce que**
le sécheur à condensation (27) et le dispositif de pompe à chaleur (13) présentent un ventilateur (21) commun avec lequel de l'air extérieur peut être aspiré et conduit à traverser un évaporateur (17) du dispositif de pompe à chaleur (13),
dans lequel, en aval du ventilateur (21), en écoulement, un dispositif de commutation d'air (24) est monté, au moyen duquel l'air extérieur transporté par le ventilateur (21) peut être distribué au choix vers des voies d'écoulement (10, 14) différentes de telle sorte qu'il peut, via une première voie d'écoulement (14), être amené à l'extérieur du lave-vaisselle automatique via la sortie d'air (15) ou bien, via une deuxième voie d'écoulement (10), être amené à passer côté extérieur devant la paroi de cuve de lessivage (26).

2. Lave-vaisselle automatique selon la revendication précédente, **caractérisé en ce que** le dispositif de commutation d'air (24) présente un clapet d'air (23) constitué de façon pivotante.

3. Lave-vaisselle automatique selon l'une des deux revendications précédentes, **caractérisé en ce que** le dispositif de commutation d'air (24) est raccordé côté sortie à deux voies d'écoulement (10, 14).

4. Lave-vaisselle automatique selon l'une des revendications précédentes, **caractérisé en ce que** le ventilateur (21) est monté en aval, en écoulement, d'un évaporateur (17) du dispositif de pompe à chaleur (13).

5. Procédé de fonctionnement d'un lave-vaisselle automatique selon l'une des revendications précédentes, dans lequel, dans une phase de chauffage, un bain de lavage est réchauffé dans un condenseur (19) du dispositif de pompe à chaleur (13), et l'air extérieur refroidi à cet effet dans un évaporateur (17) du dispositif de pompe à chaleur (13) est évacué du lave-vaisselle automatique au moyen du ventilateur (21) via une première voie d'écoulement (14) via la sortie d'air (15), et dans lequel, dans une phase de séchage, le ventilateur (21) continue à fonctionner alors que le dispositif de pompe à chaleur (13) est par ailleurs mis hors circuit et, dans une deuxième phase de séchage, une paroi de cuve de lessivage (26) est alimentée en air extérieur transporté par le ventilateur (21), dans lequel l'air extérieur est, via une deuxième voie d'écoulement (10), amené à passer côté extérieur devant la paroi de cuve de lessivage (26).

6. Procédé selon la revendication 5, **caractérisé en ce que**, en aval du ventilateur (21), en écoulement, un dispositif de commutation d'air (24) est monté, au moyen duquel l'air extérieur transporté par le ventilateur (21) est distribué au choix vers des voies d'écoulement (10, 14) différentes.

7. Procédé selon l'une des revendications 5 ou 6, **caractérisé en ce que**, pendant la première et/ou la deuxième phase de séchage, le ventilateur (21) est mis en marche à une vitesse de rotation réduite par rapport à la vitesse de rotation dans la phase de chauffage.
